# EUROPÄISCHE PATENTANMELDUNG

(11) **EP 2 979 995 A1**
(43) Veröffentlichungstag der Anmeldung: **03.02.2016**
(21) Anmeldenummer: 15002240.8
(22) Anmeldetag: 29.07.2015
(51) Int. Cl.: B65G 1/04

(54) **REGALANLAGE**

(30) Priorität: 29.07.2014 DE 102014010996
(71) Anmelder: ELMAKO GmbH & Co. KG, 76473 Iffezheim (DE)
(72) Erfinder:
(74) Vertreter: Petersen, Frank

(57) **Zusammenfassung**

Die Erfindung betrifft eine Regalanlage mit seitlichen Vertikalrahmen (1) an ihren Querseiten, zwischen denen Kassetten (4) über an den Vertikalrahmen (1) vorgesehenen Schienen (3) in Horizontalrichtung ein- oder auslagerbar sind, wobei ein Entnahmetisch (5) an einer Längsseite der Regalanlage höhenverfahrbar ist, so dass seine nach oben gerichtete Aufnahme (6) eine Kassette (4) beim Auslagern aufnehmen und dann in eine Entnahmeposition verbringen kann. Um eine solche Regalanlage besonders raumsparend zu gestalten, wird vorgeschlagen, dass der die Höhenverfahrbarkeit des Entnahmetisches (5) bewirkende Antriebsmotor (7, 8) räumlich unterhalb der Aufnahme (6) des Entnahmetisches (5) angeordnet wird, wobei vorzugsweise zwei entsprechende Antriebsmotoren redundant vorgesehen werden.

## Beschreibung

Die Erfindung betrifft eine Regalanlage mit seitlichen Vertikalrahmen an ihren Querseiten, zwischen denen vertikal übereinander angeordnete Kassetten über an den Vertikalrahmen vorgesehene, in Vertikalrichtung zueinander beabstandeten parallelen Schienen in Horizontalrichtung einoder auslagerbar sind, wobei ein Entnahmetisch mit einem umlaufenden Rand an einer Längsseite der Regalanlage höhenverfahrbar ist, so dass seine nach oben gerichtete Aufnahme eine Kassette beim Auslagern aufnehmen und dann in eine Entnahmeposition verbringen kann.

In kleinen und mittleren Unternehmen z.B. der metallverarbeitenden Industrie ist es üblich, eine größere Vielfalt an unterschiedlichen Blechen vorzuhalten, um auf verschiedenste Aufträge zeitnah reagieren zu können. Diese Bleche unterscheiden sich in ihrem Material (Stahlbleche verschiedener Qualität, Aluminiumbleche etc.) und insbesondere auch in ihren Maßen, wobei hier insbesondere die unterschiedliche Dicke zu nennen ist.

Problematisch ist jetzt, dass für derartiges Material Lagerplatz vorgesehen werden muss, der aber gerade auch in der Nähe der Fertigungsanlagen, wo das Material zu seiner weiteren Verarbeitung vorzugsweise zu lagern ist, üblicherweise relativ knapp ist.

Um dieses Problem zu lösen geht man auf entsprechende Regalanlagen über, wie sie oben beschrieben sind. Derartige Regalanlagen brauchen relativ wenig Platz und können demgemäß also auch fertigungsnah aufgestellt werden.

In einer Regalanlage wie beschrieben werden aber nicht nur ganze Bleche oder Platten gelagert sondern gegebenenfalls auch nur Reststücke. Außerdem können nicht nur flächige Elemente wie Bleche oder Platten gelagert werden, sondern es besteht grundsätzlich auch die Möglichkeit, in den Kassetten bereits verarbeitete Einzelelemente wie beispielsweise kleinere Bauteile oder aber Baugruppen zu lagern oder zwischenzulagern. Sowohl die flächigen Reststücke als auch derartige Bauteile oder Baugruppen können dabei an jeder beliebigen Stelle der Kassetten liegen, so dass es vorteilhaft ist, wenn zur Entnahme eines derartigen Reststückes oder einer derartigen Baugruppe aus verschiedensten Richtungen möglichst ungehindert und möglichst nahe an die in einer Entnahmeposition befindliche Kassette herangetreten werden kann, um ein entsprechendes Einzelteil insbesondere manuell zu entnehmen.

Um eine derartige gute Annäherbarkeit an die hierfür aus der Regalanlage ausgelagerte Kassette, die auf der nach oben gerichteten Aufnahme des Entnahmetisches liegt, an der Entnahmeposition zu erleichtern, wird vorgeschlagen, dass der die Höhenverfahrbarkeit des Entnahmetisches bewirkende Antriebsmotor räumlich unterhalb der Aufnahme des Entnahmetisches angeordnet ist.

Damit wird verhindert, dass insbesondere vor oder neben dem Entnahmetisch für die Anbringung des Antriebmotors separat Raum vorzusehen ist, und der in diesem Raum befindliche Antriebsmotor ein unmittelbares Herantreten an die Kassette erschwert.

Außerdem hat diese erfindungsgemäße Gestaltung den weiteren Vorteil, dass der insgesamt für die Regalanlage vorzusehende Platz möglichst klein gewählt werden kann.

Bei einer bevorzugten Ausführungsform der Erfindung ist dabei der Entnahmetisch an Säulen höhenverfahrbar angebracht, die Teile der seitlichen Vertikalrahmen sind.

Man hat damit die Möglichkeit, die bei der Höhenverfahrbarkeit des Entnahmetisches notwendige Führung raumsparend in die seitlichen Vertikalrahmen der Regalanlage zu integrieren, so dass damit Trage- und Führungsfunktionen in einem Element vereinigt werden können.

Es ist dabei insbesondere vorgesehen, die genannten Führungssäulen als Aluminiumprofilie auszubilden und diese mit seitlichen Zahnstangen zu versehen.

Aluminiumprofile können kostengünstig als Standardware beschafft werden, so dass damit die Regalanlage preiswert herstellbar ist. Zahnstangen sind dabei ein betriebssicheres Mittel, um eine formschlüssige Verbindung innerhalb der für die Höhenverfahrbarkeit genutzten Antriebskette zu erzeugen, so dass ein sicherer Betrieb einer entsprechenden Regalanlage gewährleistet werden kann.

Insbesondere ist dabei der Antriebsmotor mit einem selbsthemmenden Getriebe gekoppelt, z.B. einem Schneckenantrieb, über das Wellen mit aufgesetzten Zahnrädern für die Höhenverstellung angetrieben werden.

Dabei ist der Motor und seine ihm demgemäß nachgeschalteten Elemente unmittelbar an dem Entnahmetisch befestigt, wodurch eine ausgesprochen kompakte und betriebssichere Bauform der Regalanlage möglich ist.

Bei einer besonders bevorzugten Ausführungsform ist räumlich unterhalb der Aufnahme des Entnahmetisches außer einem ersten noch ein weiterer, zweiter Motor für die Auf- und Abbewegung des Entnahmetisches vorgesehen. Mit einer derartigen Ausgestaltung ist es einerseits möglich, die Hub- und Senkbewegungen mit einer höheren Geschwindigkeit auszuführen.

Mit einer Wahl der beiden Motoren in einer Weise, dass jeder der beiden Motoren für sich genommen diese Bewegungen auch unter Volllast durchführen könnte, wird die Sicherheit der Anlage erhöht, da der Antrieb für die Regalanlage somit vollständig redundant ausgeführt ist. Es gibt somit die Möglichkeit, dass auch bei Ausfall des einen Motors der andere Motor den Aufnahmetisch sowohl allein heben und senken als auch insbesondere in jeder Position halten kann. Damit ist ein unerwünschtes Absinken bei Ausfall eines Motors und eine damit ggf. einhergehende Gefährdung von Bedienpersonal sicher zu verhindern.

Weitere Vorteile und Merkmale der Erfindung ergeben sich aus der nachfolgenden Beschreibung eines Ausführungsbeispiels. Dabei zeigt:
- Fig. 1: eine perspektivische Ansicht einer Regalanlage;
- Fig. 2: die Ansicht der Regalanlage aus Fig. 1 aus einer anderen Perspektive;
- Fig. 3: die Seitenansicht einer Regalanlage;
- Fig. 4: die Aufsicht einer Regalanlage.

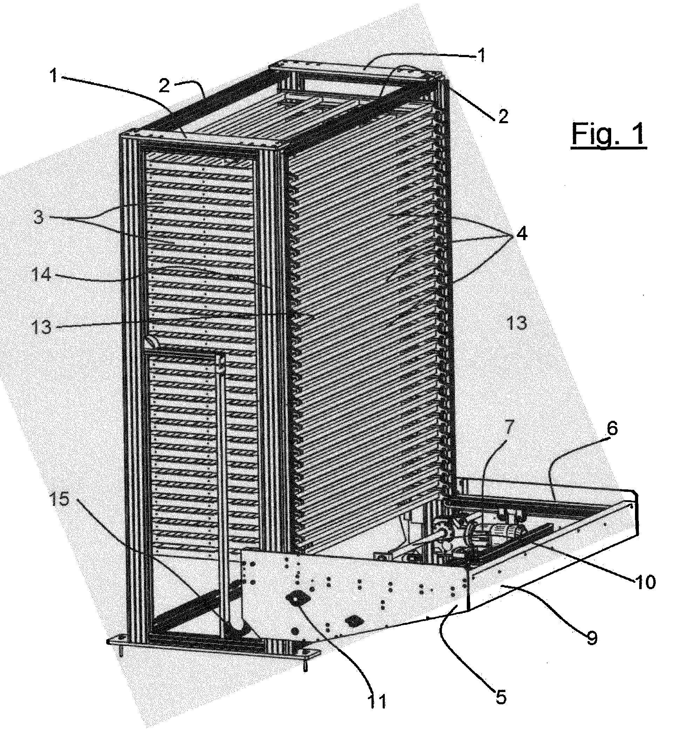

In Fig. 1 erkennt man die perspektivische Darstellung einer Regalanlage. Diese Regalanlage weist an ihren Querseiten zwei im Wesentlichen rechteckige Vertikalrahmen 1 auf, die aus Standard-Aluminiumprofilen zusammengesetzt sind. Die Rahmen sind an ihrem oberen Ende und an ihrem unteren Ende im Bereich ihrer Ecken durch Querstreben 2 verbunden, die in Richtung der Längsseite der Regalanlage verlaufen.

An ihren einander zugewandten Seiten tragen die Vertikalrahmen 1 im Wesentlichen horizontal angeordnete Schienen 3, die parallel zueinander verlaufen und in Vertikalrichtung zueinander beanstandet sind.

Auf diesen Schienen können Kassetten 4 in die Regalanlage ein- bzw. ausgelagert werden. Hierzu wird ein Entnahmetisch 5, der an der Längsseite der Regalanlage vorgesehen ist, in seiner Höhe verfahren, bis die an der Oberseite des Entnahmetisches vorgesehene, nach oben gerichtete Aufnahme 6 in der Höhe mit der Unterseite einer zu entnehmenden Kassette übereinstimmt. Durch eine hier nicht näher beschriebene Mechanik wird dann die Kassette von den sie tragenden Schienen 3 gezogen und auf der Aufnahme 6 des Entnahmetisches 5 abgelegt.

Nachdem die Kassette 4 dann vollständig aus dem Regal ausgelagert ist, wird der Entnahmetisch 5 in eine Position im unteren Bereich des Regals verfahren, an der eine Bedienperson aus der Kassette 4, die in die Entnahmeposition gefahren worden ist, Material oder Bauteile bzw. Baugruppen etc. entnehmen kann.

Es ist dabei wesentlich, dass der Antriebsmotor 7, der für die Höhenverfahrbarkeit des Entnahmetisches 5 vorgesehen ist, unterhalb der Aufnahme 6 angeordnet ist.

Damit wird der Entnahmetisch 5 in seinen Außenabmessungen nur durch seinen Rand 9 bestimmt. Ein Bediener kann somit soweit wie möglich aus allen Richtungen unmittelbar an den Entnahmetisch 5 herantreten.

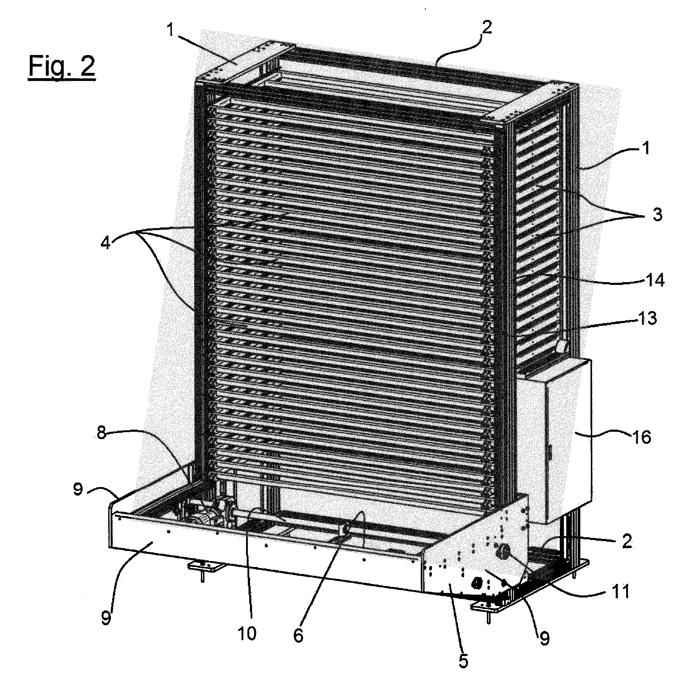

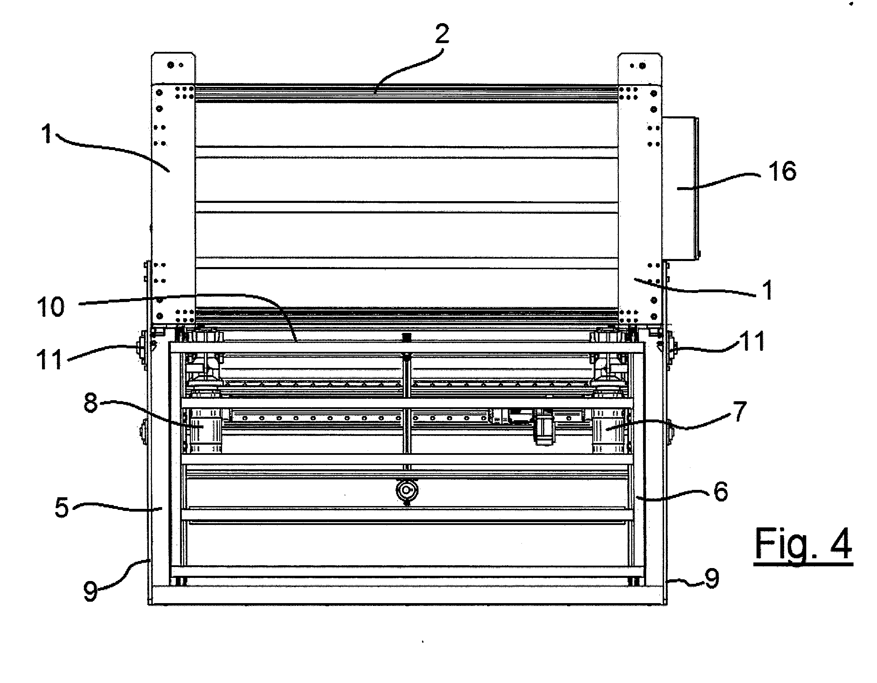

In der Fig. 2 und in der Fig. 4 ist des Weiteren zu erkennen, dass unterhalb der Aufnahme 6 neben dem Antriebsmotor 7 auch noch ein weiterer Antriebsmotor 8 vorgesehen ist.

Das Vorsehen von zwei Antriebsmotoren 7, 8 hat den Vorteil, dass eine redundante Auslegung des Antriebes möglich ist. Jeder Motor allein kann die Auf- und Abbewegung des Entnahmetisches bewirken. Wenn dann einer der beiden Motor ausfällt, so kann der andere Motor die Last auch eines beladenen Entnahmetisches 5 zumindest halten und bei Bedarf langsam absenken. So ist zu verhindern, dass eine Bedienperson, die sich ggf. unterhalb des Entnahmetisches aufhält, durch einen ungesteuert absenkenden Entnahmetisch verletzt wird.

Aufgrund dieser Konstruktion kann auf eine ansonsten übliche Einhausung der Regalanlage verzichtet werden, was den Platzbedarf für sie weiter verringert und ihren Einsatz z.B. unmittelbar im Produktionsbereich erleichtert.

Im hier dargestellten Beispiel handelt es sich bei den Antriebsmotoren 7 und 8 um Getriebemotoreinheiten, wobei die Getriebe dieser Einheiten auf eine Welle 10 wirken, die parallel zur Längsseite des Regals unterhalb der Aufnahme 6 verläuft und an ihren Enden in Wälzlagerungen 11 gelagert ist, die an den Blechen montiert sind, die den Rand 9 des Entnahmetisches 5 bilden.

Benachbart zu diesen Wälzlagerungen 11 trägt die Welle 10 drehfest auf ihr montierte Zahnräder 12, die mit einer Zahnstange 13 kämmen, die an dem Vertikalrahmen 1 außen angebracht ist.

Über diese Zahnrad/Zahnstangen-Kombination kann der Entnahmetisch 5 betriebssicher auf- und abgefahren werden, wobei durch die Verzahnung einerseits eine formschlüssige Verbindung erreicht wird, die ein unbeabsichtigtes Abrutschen des Entnahmetisches 5 bei dessen Verfahren in der Höhe verhindert. Andererseits bietet eine Zahnstange auch eine gute Möglichkeit, um damit für eine Steuerung präzise Signale liefern zu können, um die exakte Höhe des Entnahmetisches 5 zu ermitteln.

Die Zahnstangen 13 sind an Säulen 14 montiert, die Element der Vertikalrahmen 1 sind. Diese Säulen 14 übernehmen damit einerseits im Vertikalrahmen 1 Tragefunktion und bezüglich der Auf- und Abbewegung des Entnahmetisches 5 auch eine Führungsfunktion.

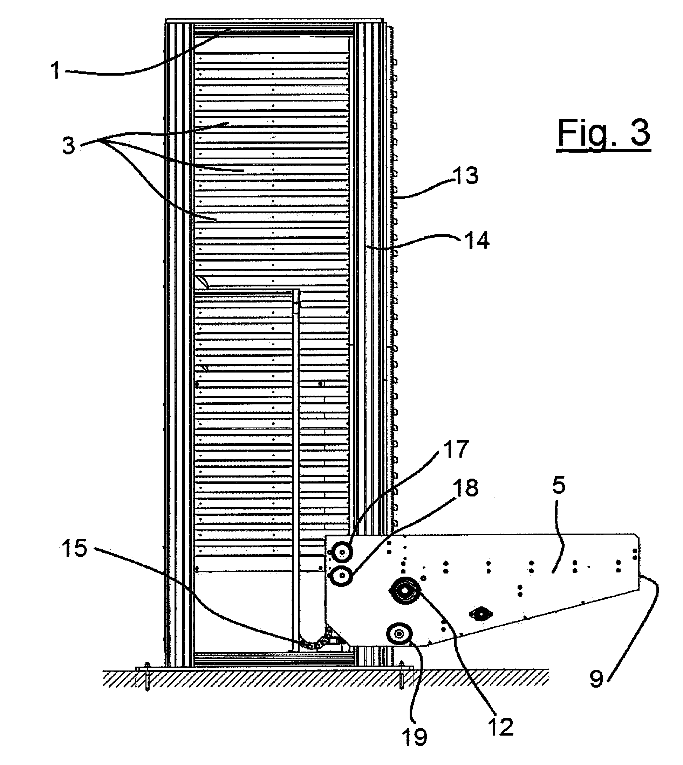

In der Fig. 1 und in der Fig. 3 erkennt man, dass der Entnahmetisch über eine Schleppleitung 15 mit der Regalanlage verbunden ist, wobei diese Schleppleitung mit dem in der Fig. 2 zu erkennenden Schaltkasten 16 verbunden ist, in dem die Steuerung für die Höhenverfahrbarkeit des Entnahmetisches 5 untergebracht ist.

Der Entnahmetisch 5 umgreift die Säulen 14 und ist mit Stützrollen 17, 18 auf deren einen Seite befestigt, während das eigentliche Kippmoment des Entnahmetisches 5 über eine Rolle 19 aufgenommen wird, die unterhalb des Zahnrades 12 montiert ist. Aufgrund der hier dargestellten Anordnung der Stützrollen 17, 18 und der Rolle 19 ist die Verbindung der Zahnräder 12 mit der Zahnstange 13 im Wesentlichen momentenfrei und lediglich die Auf- und Abbewegung des Entnahmetisches 5 ist über diese Verbindung abzuwickeln. Damit ist auch der Verschleiß in der Zahnrad/Zahnstangen-Kombination minimiert und die Betriebssicherheit der Anlage wird entsprechend erhöht.

Insgesamt bildet die Vorrichtung somit ein sehr kompaktes und betriebssicheres Lagerelement für Rohmaterial, Bauteile oder Baugruppen und kann insbesondere sehr platzsparend in Fertigungshallen untergebracht werden.

### Bezugszeichenliste

- 1: Vertikalrahmen
- 2: Querstreben
- 3: Schienen
- 4: Kassetten
- 5: Entnahmetisch
- 6: Aufnahme
- 7: Antriebsmotor
- 8: weiterer Antriebsmotor
- 9: Rand
- 10: Welle
- 11: Wälzlagerungen
- 12: Zahnräder
- 13: Zahnstange
- 14: Säulen
- 15: Schleppleitung
- 16: Schaltkasten
- 17: Stützrollen
- 18: Stützrollen
- 19: Rolle

## Patentansprüche

1. Regalanlage mit seitlichen Vertikalrahmen (1) an ihren Querseiten, zwischen denen Kassetten (4) über an den Vertikalrahmen (1) vorgesehenen Schienen (3) in Horizontalrichtung ein- oder auslagerbar sind, wobei ein Entnahmetisch (5) an einer Längsseite der Regalanlage höhenverfahrbar ist, so dass seine nach oben gerichtete Aufnahme (6) eine Kassette (4) beim Auslagern aufnehmen und dann in eine Entnahmeposition verbringen kann,
**dadurch gekennzeichnet,**
**dass** der die Höhenverfahrbarkeit des Entnahmetisches (5) bewirkende Antriebsmotor (7, 8) räumlich unterhalb der Aufnahme (6) des Entnahmetisches (5) angeordnet ist.

2. Regalanlage gemäß Anspruch 1,
**dadurch gekennzeichnet,**
**dass** der Entnahmetisch (5) an Säulen (14) höhenverfahrbar angebracht ist, die Teile der seitlichen Vertikalrahmen (1) sind.

3. Regalanlage gemäß einem oder mehreren der vorhergehenden Ansprüche.
**dadurch gekennzeichnet,**
**dass** die genannten Führungssäulen (14) als Aluminiumprofile ausgebildet und mit seitlichen Zahnstangen (13) versehen sind.

4. Regalanlage gemäß einem oder mehreren der vorhergehenden Ansprüche,
**dadurch gekennzeichnet,**
**dass** der Antriebsmotor (7, 8) mit einem selbsthemmenden Getriebe, z.B. einem Schneckenantrieb, gekoppelt ist, über das eine Welle (10) mit aufgesetzten Zahnrädern (12) für die Höhenverstellung angetrieben wird.

5. Regalanlage gemäß einem oder mehreren der vorhergehenden Ansprüche,
**dadurch gekennzeichnet,**
**dass** außer einem ersten Antriebsmotor (7) ein zweiter die Höhenverfahrbarkeit des Entnahmetisches (5) bewirkender Antriebsmotor (8) vorgesehen ist.

6. Regalanlage gemäß Anspruch 5,
**dadurch gekennzeichnet,**
**dass** jeder der beiden Antriebsmotoren (7, 8) für sich genommen die Höhenverfahrbarkeit des Entnahmetisches (5) auch unter Volllast durchführen könnte.
